# EUROPÄISCHE PATENTANMELDUNG

(11) **EP 1 522 413 A2**
(43) Veröffentlichungstag der Anmeldung: **13.04.2005**
(21) Anmeldenummer: 04023550.9
(22) Anmeldetag: 02.10.2004
(51) Int. Cl.: B41J 11/00

(54) **Drucker mit einer Leseeinrichtung**

(30) Priorität: 11.10.2003 DE 10347342
(71) Anmelder: Wincor Nixdorf International GmbH, 33106 Paderborn (DE)
(72) Erfinder: Baitz, Guenter, 13629 Berlin (DE); Malke, Wolfgang, 13454 Berlin (DE)

(57) **Zusammenfassung**

Ein Drucker mit einer Leseeinrichtung (38) zum Erfassen von auf einem Druckträger aufgebrachte fortlaufende Kontrollkennzeichen ist als Clam-Shell-Drucker (10) ausgebildet, wobei die Leseeinrichtung (38) im Bereich des Druckträger-Zufuhrkanals (34) vor einer Druckstation (19, 28) angeordnet ist.

## Beschreibung

Die Erfindung betrifft einen Drucker mit einer Leseeinrichtung für ein auf der Rückseite eines Druckträgers wie insbesondere Papier aufgebrachtes Kontrollzeichen. Sie geht aus von der WO 9422117 A1.

Der Druck von Wertscheinen wie Fahrscheinen oder Eintrittskarten wird im allgemeinen auf Sonderpapier durchgeführt, welches zum Schutz vor Fälschungen oder Manipulationen rückseitig oder auch vorderseitig fortlaufend mit Kontrollzeichen bedruckt ist. Diese sind häufig als Strichcodemarkierungen ausgeführt. Es kann sich aber auch um andere Steuerzeichen, Zahlenkombinationen oder bildliche Darstellungen handeln. Darüber hinaus ist es auch denkbar, dass der Druckträger mit RFID-Tags versehen ist.

In der WO 9422117 A1 ist eine als Scheckdrucker ausgebildete Belegdruckeinrichtung in einem Scheckausgabeautomaten beschrieben, die eine ortsfest in ihrem ausgabeseitigen Transportkanal angeordnete Leseeinrichtung zum Erfassen eines auf der Rückseite der Scheckformulare aufgedruckten fortlaufenden Kontrollkennzeichens enthält. In dem ausgabeseitigen Transportkanal ist eine trommelartige drehbare Sammelstation angeordnet, auf der eine Mehrzahl von Schecks gesammelt wird, die dann als Bündel zu einer Ausgabeöffnung transportiert werden. Die Leseeinrichtung ist am Umfang der Sammelstation angeordnet, wo sie unter Ausnutzung der Trommeldrehung das Kontrollzeichen des jeweils zuletzt in die Sammelstation transportierten Scheckformulars liest. Die Erfassung der Kontrollkennzeichen erfolgt nach dem Bedrucken der Scheckformulare mit kundenindividuellen Informationen, um die auszugebenden Scheckformulare dem entsprechenden Kundenkonto zuordnen zu können.

Da die Belegdruckeinrichtung in einem Scheckausgabeautomaten angeordnet ist, der nur von ausgebildetem Bankpersonal mit Druckträgern beschickt wird, ist es nicht weiter störend, dass das Nachfüllen von Druckträgern relativ kompliziert und deshalb zeitaufwändig ist.

Aufgabe der vorliegenden Erfindung ist es, einen Drucker für das Bedrucken von Druckträgern wie insbesondere Papier anzugeben, in den der Druckträger einfach und schnell eingelegt werden kann und mit dem nur mit einem speziellen Kontrollzeichen versehene Druckträger bedruckt werden können.

Die Aufgabe wird durch die Merkmale des Anspruchs 1 gelöst.

Durch die Ausbildung des Druckers als Clam-Shell-Drucker ist ein einfaches Einlegen des Druckträgers ermöglicht. Durch die Anordnung einer Leseeinrichtung im Bereich des Druckträger-Zufuhrkanals vor der Druckstation kann das Kontrollzeichen vor dem Beginn des Druckvorgangs gelesen werden. Ist das Kontrollzeichen nicht vorhanden, wird ein Signal von einer Steuerkarte ausgegeben, dass ein Bedrucken des Druckträgers nicht erfolgen soll.

Ein Clam-Shell-Drucker besteht bekanntlich aus einem Oberteil und einem Unterteil, wobei das Unterteil eine Aufnahmemulde für einen rollenförmigen Druckträger-Vorrat und einen Druckkopf aufweist. Das Oberteil ist schwenkbar an dem Unterteil gelagert und enthält ein Druckwiderlager. In dem einen Teil mag auch ein Messer und im dem anderen Teil ein Gegenmesser einer Abschneidevorrichtung angeordnet sein. Wird das Oberteil aufgeklappt, ist das Druckwiderlager von dem Druckkopf getrennt und die Abschneidevorrichtung geöffnet, so dass eine Druckträger-Vorratsrolle leicht und schnell in den Drucker eingelegt werden kann. Nach dem Zuklappen des Oberteils ist der Drucker wieder betriebsbereit. Das Einlegen oder der Wechsel einer Druckträger-Vorratsrolle ist also auch von einer ungeübten Person durchzuführen.

Bei dem erfindungsgemäßen Clam-Shell-Drucker befindet sich die Leseeinrichtung vor der Druckstation. Ein Bedrucken des Druckträgers kann nur dann erfolgen, wenn die Leseeinrichtung das Kontrollkennzeichen des zu bedruckenden Druckträger-Abschnitts erkennt. Die genannte Anordnung der Leseeinrichtung hat darüber hinaus den Vorteil, dass ein manipulierter Druckträger nirgendwo in den Drucker eingeschleust werden kann.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert.

Es zeigt
- Fig. 1: einen Clam-Shell-Drucker im geschlossenen Zustand,
- Fig. 2: den Drucker aus Fig. 1 im aufgeklappten Zustand.

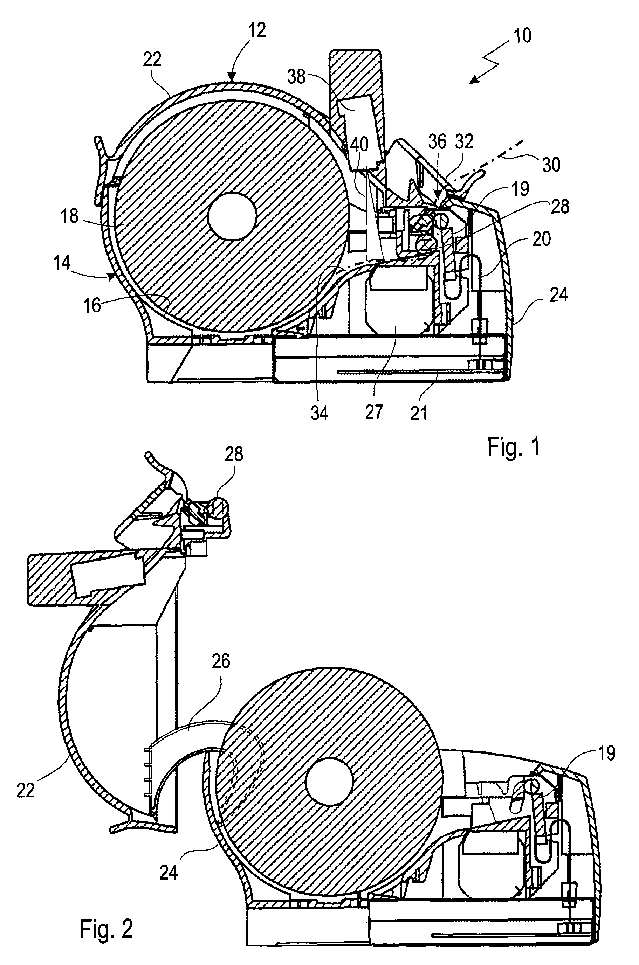

In Fig. 1 ist ein Clam-Shell-Drucker 10 in geschlossenem und in Fig. 2 in aufgeklapptem Zustand jeweils in einer geschnittenen Seitenansicht dargestellt. Der Clam-Shell-Drucker 10 besteht aus einem Oberteil 12 und einem Unterteil 14, welch letzteres eine Aufnahmemulde 16 für eine Druckträger-Vorratsrolle 18 und vorteilhafterweise einen Druckkopf 19 aufweist. Dieser ist als Thermodruckleiste, kann aber auch als Tinten- oder Nadeldruckkopf ausgebildet sein. Der Druckkopf 19 ist über einen Flachverbinder 20, beispielsweise ein Flachbandkabel oder eine flexible mit Leiterbahnen versehene Kunststofffolie mit einer in einer unteren Gehäuseschale 24 angeordneten Steuerkarte 21 verbunden.

Das Oberteil 12 ist von einer oberen Gehäuseschale 22 und das Unterteil 14 von der bereits erwähnten unteren Gehäuseschale 24 überdeckt. Das Oberteil 12 ist mit Hilfe eines Schwenkarmes 26 (Fig. 2) derart schwenkbar an dem Unterteil 14 gelagert, dass die Aufnahmemulde 16 im aufgeklappten Zustand des Clam-Shell-Druckers 10 in Gänze freigegeben ist. Dadurch ist das Einlegen einer Druckträger-Vorratsrolle 18 besonders einfach. Das Oberteil 14 enthält vorzugsweise ein walzenförmiges Druckwiderlager 28, das im zugeklappten Zustand des Clam-Shell-Druckers 10 mit einem im Unterteil 12 angeordneten Antriebsmotor 27 antriebsverbunden ist. Das Druckwiderlager 28 übernimmt zugleich den Vorschub des Druckträgers 30. In die obere Gehäuseschale 22 ist eine Ausgabeöffnung 32 für bedruckte Abschnitte des Druckträgers 30 eingebracht. Zwischen dem Druckkopf 19 und der Ausgabeöffnung 32 ist eine Abschneidevorrichtung 36 vorgesehen.

Vorzugsweise an der oberen Gehäuseschale 22 ist eine Leseeinrichtung 38 für die auf dem Druckträger 30 aufgedruckten oder angeordneten Kontrollkennzeichen angebracht. Diese sind häufig als Strichcodemarkierungen ausgeführt. Es kann sich aber auch um andere Steuerzeichen, Zahlenkombinationen oder bildliche Darstellungen handeln. Darüber hinaus ist es auch denkbar, dass der Druckträger mit RFID-Tags versehen ist. Vorteilhafterweise ist das Kontrollkennzeichen auf der Rückseite des Druckträgers 30 aufgedruckt, es kann sich aber auch auf der Vorderseite befinden, insbesondere wenn es sich um transparente Steuerzeichen handelt. Vorzugsweise ist die Leseeinrichtung 38 als optische Leseeinrichtung ausgebildet, wobei in dem hier beschriebenen Ausführungsbeispiel ein Abtaststrahl 40 der Leseeinrichtung 38 auf einen von der Aufnahmemulde 16 in Richtung des Druckkopfes 19 sich erstreckenden Druckträger-Zufuhrkanal 34 gerichtet ist und unmittelbar vor dem Druckwiderlager 28 auf die Rückseite des Druckträgers 30 trifft. Ist hingegen das Kontrollkennzeichen auf der Vorderseite des Druckträgers 30 angebracht, so ist die Lesevorrichtung 38 vorzugsweise im Unterteil 14 des Druckers angeordnet. Es liegt jedoch auch im Rahmen der Erfindung, den Druckkopf und das Gegenlager anders anzuordnen. Handelt es sich bei dem Kontrollkennzeichen um RFID-Tags, ist entsprechend die Leseeinrichtung als RFID-Leseeinrichtung ausgebildet.

Das von der Leseeinrichtung 38 ausgelesene Signal wird an eine Steuerkarte 21 weitergeleitet, die den Druckkopf 19 derart steuert, dass ein Druck nicht erfolgt, wenn die Leseeinrichtung 38 kein Kontrollzeichen erkannt hat. Hierdurch wird sichergestellt, ein manipulierter Druckträger nirgendwo in den Drucker eingeschleust werden kann.

## Patentansprüche

1. Drucker (10) zum Bedrucken eines Druckträgers (30) wie Papier mit einer Druckstation (19, 28) und mit einem von einem Druckträgervorrat (18) zu der Druckstation (19, 28) führenden Druckträger-Zufuhrkanal (34),
**dadurch gekennzeichnet,**
**dass** der Drucker als Clam-Shell-Drucker (10) ausgebildet ist und eine Leseeinrichtung (38) zum Erfassen von auf dem Druckträger (30) aufgebrachten Kontrollkennzeichen aufweist, wobei die Leseeinrichtung (38) im Bereich des Druckträger-Zufuhrkanals (34) vor der Druckstation (19, 28) angeordnet ist.

2. Drucker nach Anspruch 1, bei dem die Leseeinrichtung (38) in der oberen Gehäuseschale (12) angeordnet ist.

3. Drucker nach Anspruch 1 oder 2, dessen Leseeinrichtung (38) als optische Leseeinrichtung ausgebildet ist.

4. Drucker nach Anspruch 3, **dadurch gekennzeichnet, dass** die Leseeinrichtung als Strichcodeleser ausgebildet ist.

5. Drucker nach einem der vorhergehenden Ansprüche, bei dem ein Druck nur erfolgt, wenn die Leseeinrichtung (38) zuvor ein Kontrollkennzeichen erkannt hat.
